# EUROPEAN PATENT SPECIFICATION

(11) **EP 2 192 146 B1**
(45) Date of publication and mention of the grant of the patent: **14.12.2011**
(21) Application number: 09173905.2
(22) Date of filing: 23.10.2009
(51) Int. Cl.: C08J 3/22, C08L 65/00, D01F 6/92

(54) **A process for producing porous polymer masterbatch and fiber thereof having anti-bacterial and odor eliminating functions**
Verfahren zur Herstellung einer porösen Polymervormischung und Faser mit antibakteriellen und geruchsbeseitigenden Funktionen
Procédé pour produire le mélange maître en polymère poreux et fibre associée disposant de fonctions antibactériennes et de suppression des odeurs

(30) Priority: 26.11.2008 TW 97145602
(43) Date of publication of application: 02.06.2010
(73) Proprietor: Colotex Industrieal Co., LTD., Neihu Dist Taipei City (TW)
(72) Inventor: Shen, Kuen-Chin, Neihu District, Taipei City (TW)
(74) Representative: Chaillot, Geneviève

(56) References cited:
- CN-A- 101 525 798
- CN-Y- 2 307 592
- CN-Y- 2 579 195
- US-A- 5 466 455
- US-A1- 2004 247 654

## Description

### 1. Field of the invention

The invention relates to a process for producing porous polymer masterbatch and fiber thereof that have anti-bacterial and odor eliminating functions, and in particular, to a process for producing anti-bacterial and odor eliminating polymer masterbatch and fiber thereof containing organic or inorganic materials.

### 2. Description of the prior art

As the demand for a modem hygienic life increases, anti-bacterial products have gradually received more welcome from consumer's. This trend extends to the textile industry and has resulted into considerable progress in the production of anti-bacterial fibers and clothing and other daily use articles.

Anti-bacterial agent used in the anti-bacterial fiber can be divided generally into two types, namely, an organic anti-bacterial agent, and an inorganic anti-bacterial agent. One of the organic anti-bacterial agents is quaternary ammonium salt. Unfortunately, quaternary ammonium salt has poor heat resistance and can not be used in the process for making plastics or fiber spinning products.

On the other hand, an inorganic anti-bacterial agent is a carrier (for example zeolite) containing metal ions (for example Ag⁺, Zn²⁺, Cu²⁺), or certain types of nano-scale metal particles (for example nano-scale silver particles), and both are considered as effective particles in the following description.

Silver has a well-accepted anti-bacterial effect. In general, an antibiotic can kill approximately six different types of bacteria, while silver can kill about 600 types of bacteria. In addition, silver is a non-toxic substance, and therefore silver is used extensively and has a long history. Furthermore, through nanotechnology techniques, silver particles become more active and their anti-bacterial function is enhanced, thereby promoting the quality of the home environment and personal hygiene. Aqueous solutions containing silver ions released from both nano-scale silver granules and nanometer silver has remarkable anti-bacterial effect. Under the circumstance of multiple dilutions, nanometer silver still has an inhibition efficiency of 99.99% against *Escherichia coli, Staphylococcus aureus, Sarmonella, Pseudomonas aeruginosa* and the like. The principal cause of this resides in the biological action that silver has itself. Active silver ions can attract the sulfhydryl group on the enzymatic protein in the bacteria and causes these groups to quickly bind with each other, thereby rendering the enzymes containing sulfhydryl groups to lose activity and hence kill the bacteria.

A traditional process for using silver ion to produce fiber comprises immersing fiber in an organic anti-bacterial agent so as to adhere a carrier or nanometer silver particle on the surface of the fiber. In such traditional processes, effective particles in the anti-bacterial inorganic solvent may be easily washed off, and at the same time, may easily induce an allergic response in the user. Another process for producing anti-bacterial fiber comprises mixing an inorganic anti-bacterial agent and polyester, and then drawing the mixture thus-obtained into fibers containing effective particles. In such a process for making anti-bacterial fiber, most of the anti-bacterial materials are embedded within the fiber, and hence the anti-bacterial and odor eliminating functions are unable to be exhibited. Furthermore, part of the anti-bacterial material exposed on the outside of the fiber might lose its anti-bacterial and odor eliminating functions after washing or dying and finishing due to binding with chlorine, sulfur and the like.

In view of the foregoing, conventional techniques mentioned above still have many disadvantages, poorly designed and needs to be improvement.

The inventor had learned of the various disadvantages and shortcomings derived from such conventional techniques described above, and had thought to improve and innovate, and finally, after studying intensively for many years, has developed a process for producing porous polymer masterbatch and fiber thereof that have anti-bacterial and odor eliminating functions according to the invention.

### SUMMARY OF THE INVENTION

One object of the invention is to provide a process for producing porous polymer masterbatch and fiber thereof that have anti-bacterial and odor eliminating functions, for the purpose of reducing lost particles in the anti-bacterial inorganic solvent, which tend to be washed off easily, and hence tend to lower the anti-bacterial effect as well as lead to potential unknown effects on the ecological equilibrium of the environment.

Another object of the invention is to provide a process for producing porous polymer masterbatch and fiber thereof that have anti-bacterial and odor eliminating functions, characterized in that the inventive process can improve the previous conventional process for making anti-bacterial fiber; where in the conventional process, an inorganic anti-bacterial agent is mixed in a polymer and then the resulted mixture is drawn to form fiber containing fine nanometer particles, and in such conventional process for making anti-bacterial fiber, the nanometer particles are difficult to be dispersed homogeneously in the fiber, and further, most of the nanometer particles are embedded within the fiber, so that its anti-bacterial effect can not function effectively.

Still another object of the invention is to provide a process for producing porous polymer masterbatch and fiber thereof that have anti-bacterial and odor eliminating functions, characterized in that wide and diverse materials can be used, and has a wide spectrum of anti-bacterial and anti-fungal effects.

The process for producing porous polymer masterbatch and fiber thereof that have anti-bacterial and odor eliminating functions comprises: step 1, grinding kieselguhr or active carbon into micro-particles; step 2, immersing said micro-particles obtained in step 1 in an organic Chinese herbal medicine and inorganic anti-bacterial minerals and polyvinyl alcohol with constant stirring; step 3, air-drying micro-particles thus-obtained in step 2, and dry-grinding further the dried micro-particles into finer particles suitable for drawing and to be dispersed homogeneously in a solution; step 4, carrying out a esterification reaction for binding monomer to form an anti-bacterial polyester masterbatch; and/or step 5, producing the polyester masterbatch formed in step 4 into anti-bacterial polyester fiber by cold grain spin-drawing technique.

### BRIEF DESCRIPTION OF THE DRAWINGS

These features and advantages of the present invention will be fully understood and appreciated from the following detailed description of the accompanying drawings, wherein:
Figure 1 shows the flow chart for carrying out the process according to the invention;
Figure 2 is a schematic view of porous micro-particles according to the invention;

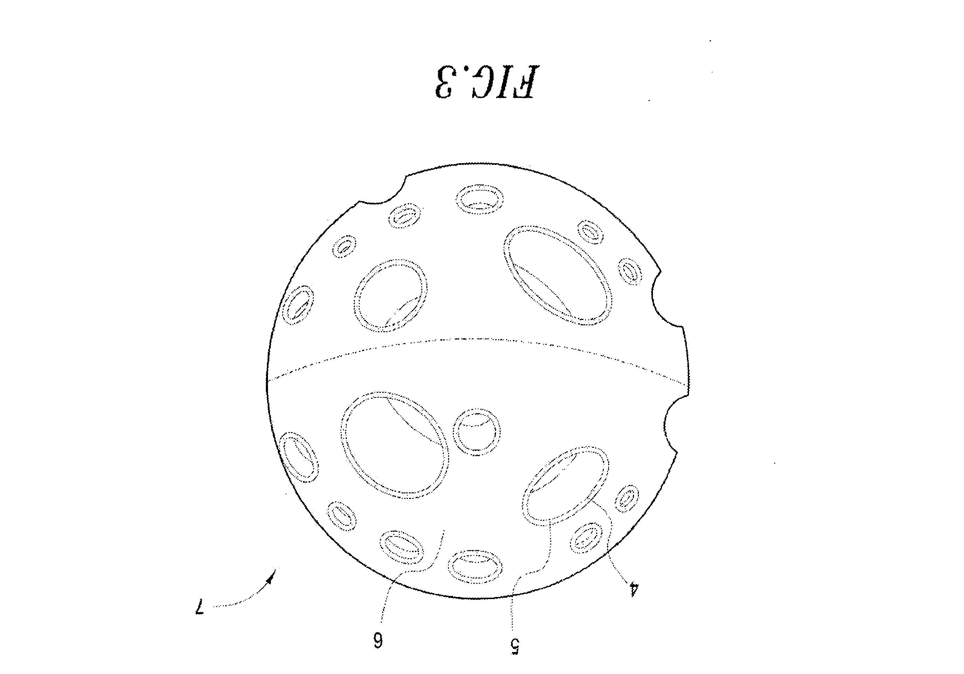

Figure 3 is a schematic view of finer micro-particles obtained after dry-grinding according to the invention; and

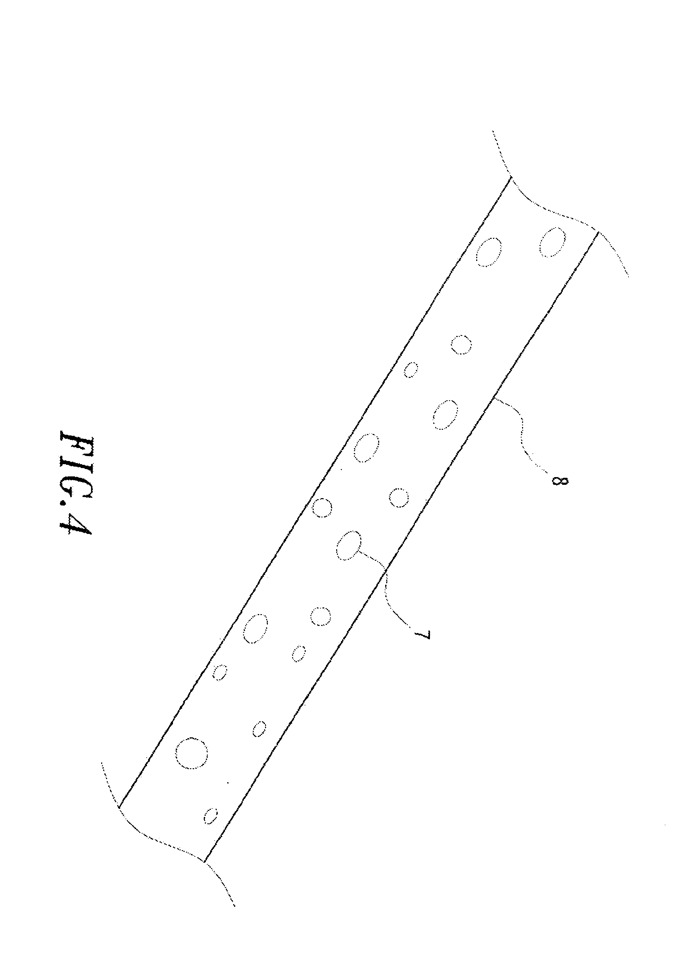

Figure 4 is a schematic view of anti-bacterial polyester fibers according to the invention.

### DETAILED DESCRIPTION OF THE PREFERRED EMBODIMENT

For understanding further the objects, characteristics and effects of the invention, the following non-limiting examples will be illustrated in conjunction with the accompanied drawings below.

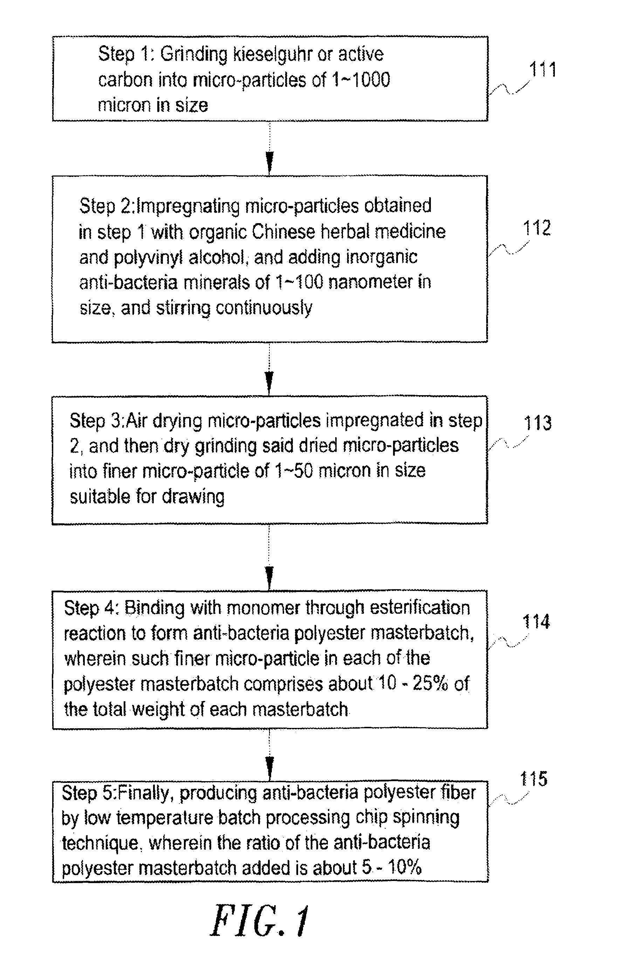

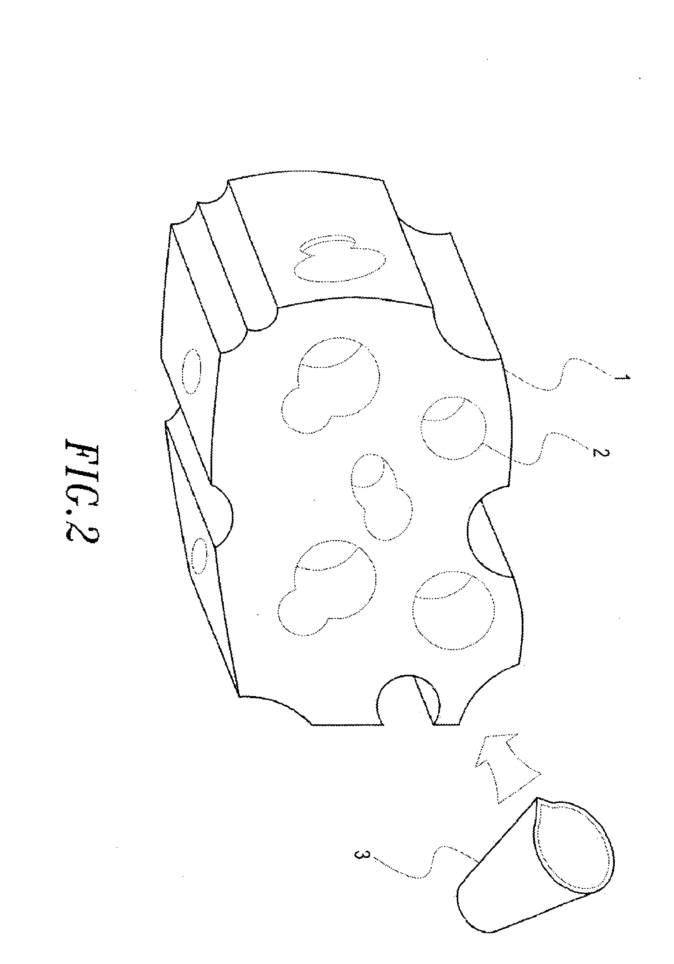

Referring to Fig. 1, the process for producing porous polymer masterbatch and fiber thereof having anti-bacterial and odor eliminating functions provided according to the invention comprises following steps:
step 1: grinding kieselguhr or active carbon into micro-particles of 1∼1000 micron (111);
● Referring to Fig. 2, a schematic view of kieselguhr or active carbon micro-particles. In the step 1, kieselguhr or active carbon is ground at first into micro-particles 1. In the case of active carbon, the principal component of active carbon is carbon, combined with minor amount of hydrogen, oxygen, nitrogen, sulfur and the like, and is a black porous material 2 with complex surface. It has a six ring structure formed from carbon and its shape may range from a cylindrical coarse granule to a fine powder particle, and hence it has two type of morphology of granule and powder. The granule has generally a diameter of 1∼6 mm, and its length is 0.7∼4 times of its diameter. Alternatively, it may be present as a granule of irregular shape with 6∼120 particle meshes. The active carbon is odorless, and tasteless, and is insoluble in water and organic solvent. Active carbon has a packing density of about 0.3∼0.6 g/ml, a volume of the very large micro-pore of about 0.6∼0.8 ml/g, and a specific surface of about 500∼1,500 m²/g, and therefore, exhibits a very strong adhesive force to an organic macromolecular material;
● In addition, kieselguhr can be used in the process of the invention. Kieselguhr is mined from fossil lake beds. Such kieselguhr is formed from the deposition of large amounts of dead micro-diatoms on the ancient lake or sea bed. Diatom is classified into two morphologies of salt water diatom and fresh water diatom. Accordingly, the thus-mined kieselguhr is classified also into two types; salt water kieselguhr and fresh water kieselguhr. After mining, it can be washed, processed and ground into micro-powder of various specific sizes;

step 2: impregnating micro-particles obtained in step 1 in an organic Chinese herbal medicine and a water-soluble cementing agent, adding inorganic anti-bacterial minerals of 1∼100 nm in size, and then stirring continuously for more than 24 hours, thereby enabling the organic Chinese herbal medicine and inorganic anti-bacterial minerals to be impregnated, bound and adhered sufficiently in the pores of the micro-particle (112);
● Referring to Table 1, each of the inorganic anti-bacterial minerals mentioned above has its own special effect. Inorganic anti-bacterial minerals used in the process of the invention may be selected from the group consisting of realgar, calamine, melanterite, talc, alum, sulfur, borax, nanometer silver (Ag), nanometer zinc (Zn), nanometer copper (Cu), titanium dioxide (TiO₂) and any combination thereof;

**Table 1: The pharmacological effect, function and chemical component of inorganic anti-bacterial minerals.**

| Item | Name | Pharmacological effect |
|---|---|---|
| 1. | Realgar | Detoxification, removing moisture, killing insects, anti-bacterial |
| 2. | Calamine | Absorbing moisture, stopping itch, controlling sores, antiseptic, anti-bacterial |
| 3. | Melanterite | Treating eczema, killing insects, anti-bacterial |
| 4. | Talc | Treating eczema, wet sore, scabies, anti-bacterial |
| 5. | Alum | Detoxification, killing insects, drying moisture, stopping itch, wide spectrum anti-bacterial |
| 6. | Sulfur | Killing insects, stopping itch, scabies, eczema, killing insects, anti-bacterial |
| 7. | Borax | Detumescence, antiseptic, anti-bacterial, treating scabies and itch |
| 8. | Nanometer silver (Ag) | Anti-bacterial, anti-fungal |
| 9. | Nanometer zinc (Zn) | Anti-bacterial, anti-fungal |
| 10. | Nanometer copper (Cu) | Anti-bacterial, anti-fungal |
| 11. | Titanium dioxide (TiO₂) | Anti-bacterial, anti-fungal |

● The water-soluble cementing agent 3 may be selected from polyvinyl alcohol (PVA) or the like. PVA is an extensively used water-soluble macromolecular polymer, with a property between those of plastic and rubber. Since PVA possesses a strong bonding property, flexibility, smoothness of the surface texture, oil resistance, solvent resistance, protective gel property, gas insulating property, wear resistance and after special treatment, water resistance, it is used very often in raw materials for fiber;
● The binding property of PVA is utilized to adhere the extract essence fluid of herbal plants on the surface of the outer and inner holes of micro-particles so as to increase the amount and surface area of the organic Chinese herbal medicine and inorganic anti-bacterial minerals thus-adhered. The herbal plants useful in the process according to the invention may be selected from the group consisting of Radix et RhizomanNotopterygii, Black false hellebore, Hibiscus syriacus skin, Cinnamomum cassia Presl, camphor, Cnidium monnieri (L) Cuss, Hydnocarpus anthelmintica Pier., rosin and any combination thereof. Each of the herbal plants mentioned above has its own specific effect as shown in Table 2;

**Table 2: Pharmacological effect, functions and chemical components of Chinese herbs**

| Item | Name | Pharmacological effect | Function | Chemical components |
|---|---|---|---|---|
| 1. | Radix et Rhizoma notopterygii | Anti-bacterial, anti-fungal | | |
| 2. | Black false hellebore | Anti-bacterial, anti-fungal, killing insects | | |
| 3. | Hibiscus syriacus skin | Killing insects, stopping itch, anti-bacterial | | |
| 4 | Cinnamomum cassia Presl | Anti-bacterial, anti-bacterial anti-tinea, anti-fungal | Sedation, Analgesia, Allaying fever | Cinnamic aldehyde, Cinnamic acid, Cinnamyl acetate, Phenylpropyl acetate |
| 5. | Camphor | Removing moisture, killing insects, anti-bacterial, anti-fungal | | |
| 6 | Cnidium monnieri (L) Cuss | Anti-fungal, anti-Gram negative bacteria, anti-mold Anti-Ringworm fungus | Removing rheumatism, drying moisture, killing insects, stopping itch | L-Piuene, L-Camphene, Bornyl isovalerate, Isoborneol, Edultim, Cnidimine, Xanthotoxin |
| 7 | Hydnocarpus anthelmintica Pier. | Anti-bacterial, treating tinea manus and tinea pedis | Detoxification, killing insects, removing tinea cruris | Chaulmoogric Acid, Hydnocarpic Acid, Gorlic Acid |
| 8. | Rosin | Anti-bacterial, anti-mold, treating scabies, wet itch | | |

● The organic Chinese herbal medicine and inorganic anti-bacterial minerals mentioned in step 2 may be used in combination with one another to achieve the desired pharmacological effect and function; step 3: air drying the micro-particle impregnated in step 2, and dry grinding them further into finer micro-particle of 1∼50 micron in size suitable for drawing, and dispersing them homogeneously in a solution (113);
● Referring to Fig. 2, the surface and the outside and inside of the holes in the thus-impregnated micro-particles had been adhered with extract essence fluid of the herbal plants. Thereafter, the impregnated micro-particles thus air dried were dry ground further into finer micro-particles. The surface 6 and the outside and inside of holes 4 in the thus-obtained finer micro-particles 7 had been adhered with the organic Chinese herbal medicine and inorganic anti-bacterial minerals 5. The air-dried finer micro-particle 7 had a size of 1∼50 micron and became a finer micro-particle suitable for drawing as well as could be dispersed homogeneously in a solution.
● The solution mentioned in the step 3 of the inventive process may be ethylene glycol solution. Ethylene glycol is a catalyst used in the condensation polymerization of polyester, and has the following advantages: 1. It has greater solubility and better dispersability in ethylene glycol solution; 2. It has good activity, and can enhance productivity of the apparatus; 3. This catalyst itself will not introduce new contaminants, can increase the intrinsic mass and improve post-processing spinning ability; 4. It can improve hues and heat stability of the slice.

step 4: binding the finer micro-particle dispersed homogeneously in the solution to a monomer through esterification reaction to form anti-bacterial polyester masterbatch, wherein such finer micro-particle in each of the polyester masterbatch comprises about 10 - 25% of the total weight of each masterbatch (114);
step 5: Using low temperature batch processing chip spinning technique to produce the anti-bacterial polyester masterbatch to produce anti-bacterial polyester fiber 8, wherein the ratio of the anti-bacterial polyester masterbatch added is about 5-10% (115).

In summary, the process for producing porous polymer masterbatch and fiber thereof having anti-bacterial and odor eliminating functions provided by the invention comprises following steps:
step 1: grinding kieselguhr or active carbon into micro-particles of 1∼1000 micron in size (111);
step 2: impregnating micro-particles obtained in step 1 with organic Chinese herbal medicine and water-soluble cementing agent and inorganic anti-bacterial minerals of 1∼100 micron in size, and stirring continuously for more than 24 hours, thereby enabling sufficient penetration, binding and adsorption of the organic Chinese herbal medicine and inorganic anti-bacterial minerals in pores of micro-particles (112);
step 3: air drying micro-particles impregnated in step 2, and then dry grinding said dried micro-particles into finer micro-particle of 1∼50 micron in size suitable for drawing and dispersing homogeneously in a solution (113);
step 4: binding said finer micro-particles dispersed homogeneously in a solution with monomer through esterification reaction to form said anti-bacterial polyester masterbatch, wherein such finer micro-particle in each of the polyester masterbatch comprises about 10 - 25% of the total weight of each masterbatch (114);
step 5: producing anti-bacterial polyester fiber from said anti-bacterial polyester masterbatch by low temperature batch processing chip spinning technique, wherein the ratio of the anti-bacterial polyester masterbatch added is about 5 - 10% (115).

Accordingly, the process for producing porous polymer masterbatch and fiber thereof having anti-bacterial and odor eliminating functions provided by the invention has following advantages over other conventional techniques:
1. The inventive process for producing porous polymer masterbatch and fiber thereof having anti-bacterial and odor eliminating functions can reduce the lost amount of particles originally present in the anti-bacterial inorganic solvent, wherein said particles is susceptible to be washed off, and thus, may lower its anti-bacterial effect as well as may cause an unexpected influence on the ecological equilibrium of the environment.
2. The inventive process for producing porous polymer masterbatch and fiber thereof having anti-bacterial and odor eliminating functions can enable these odor eliminating anti-bacterial materials to penetrate and adhere into tremendous micro-pores of these porous particles, and further, since they can bind in these micro-pores by means of water-soluble cementing agent, thereby these materials tend not to lose and hence can achieve the purpose of increasing its anti-bacterial and odor eliminating functions.
3. The inventive process for producing porous polymer masterbatch and fiber thereof having anti-bacterial and odor eliminating functions can be extended to make various related products having anti-bacterial and odor eliminating functions, such as shoes, bags, socks, clothes.
4. The inventive process for producing porous polymer masterbatch and fiber thereof having anti-bacterial and odor eliminating functions can adopt wide and diverse materials, and hence can retain wide spectrum anti-bacterial and anti-fungal effects, without loses its anti-bacterial function during dying and finishing process due to bind with chlorine and sulfur like, for example, using nanometer silver alone.

Many changes and modifications in the above-described embodiment of the invention can, of course, be carried out without departing from the scope thereof. Accordingly, to promote the progress in science and useful arts, the invention is disclosed and is intended to be limited only by the scope of the appended claims.

## Claims

1. A process for producing porous polyester masterbatch having anti-bacterial and odor eliminating functions, said process comprising following steps:
step 1: grinding micro-particles (1) into micro-particles of 1∼1000 micron in size;
step 2: impregnating micro-particles (1) obtained in step 1 with organic Chinese herbal medicine and polyvinyl alcohol, adding inorganic anti-bacterial minerals (5) of 1∼100 nanometer in size thereto, and stirring continuously for more than 24 hours, thereby enabling sufficient penetration, binding and adsorption of the organic Chinese herbal medicine and inorganic anti-bacterial minerals (5) in pores of micro-particles;
step 3: air drying micro-particles (1) impregnated in step 2, and then dry grinding said dried micro-particles (1) into finer micro-particle (7) of 1∼50 micron in size suitable for drawing and dispersing homogeneously in a solution; and
step 4 : binding said finer micro-particles (7) dispersed homogeneously in a solution with monomer through esterification reaction to form said anti-bacterial polyester masterbatch.

2. A process for producing porous polyester masterbatch having anti-bacterial and odor eliminating functions as recited in claim 1, further comprising the step of producing anti-bacterial polyester fiber (8) from said anti-bacterial polyester masterbatch by low temperature batch processing chip spinning technique.

3. A process for producing porous polyester masterbatch having anti-bacterial and odor eliminating functions as recited in claim 1, wherein said micro-particle (1) is kieselguhr or active carbon.

4. A process for producing porous polyester masterbatch having anti-bacterial and odor eliminating functions as recited in claim 1, wherein said herbal plants is selected from the group consisting of Radix et Rhizoma notopterygii, Black false hellebore, Hibiscus syriacus skin, Cinnamomum cassia Presl, camphor, Cnidium monnieri (L) Cuss, Hydnocarpus anthelmintica Pier., rosin and any combination thereof.

5. A process for producing porous polyester masterbatch having anti-bacterial and odor eliminating functions as recited in claim 1, wherein said inorganic anti-bacterial mineral (5) is selected from the group consisting of realgar, calamine, melanterite, talc, alum, sulfur, borax, nanometer silver (Ag), nanometer zinc (Zn), nanometer copper (Cu), titanium dioxide (Ti02) and any combination thereof.

6. A process for producing porous polyester masterbatch having anti-bacterial and odor eliminating functions as recited in claim 1, wherein said solution is ethylene glycol solution.

7. A process for producing porous polyester masterbatch having anti-bacterial and odor eliminating functions as recited in claim 2, wherein, said finer micro particle (7) in each of said anti-bacterial polyester masterbatch comprises about 10 - 25% of the total weight of each of said polyester masterbatch.

8. A process for producing fibers of porous polyester masterbatch having anti-bacterial and odor eliminating functions as recited in claim 3, wherein, the ratio of the anti-bacterial polyester masterbatch added is about 5 - 10%.

## Patentansprüche

1. Verfahren zur Herstellung einer porösen Polyestervormischung mit antibakteriellen und geruchsbeseitigenden Funktionen, wobei das Verfahren die folgenden Schritte umfasst:
Schritt 1: Mahlen von Mikropartikeln (1) zu Mikropartikeln mit einer Größe von 1 bis 1000 Mikrometern;
Schritt 2: Tränken der Mikropartikel (1), die in Schritt 1 gewonnen wurden, mit organischen chinesischen pflanzlichen Arzneimitteln und Polyvinylalkohol, Hinzugeben von anorganischen antibakteriellen Mineralien (5) mit einer Größe von 1 bis 100 Nanometern und ständiges Rühren über mehr als 24 Stunden, wodurch ein ausreichendes Eindringen, Binden und Adsorbieren der organischen chinesischen pflanzlichen Arzneimittel und der anorganischen antibakteriellen Mineralien (5) in Poren der Mikropartikel ermöglicht wird;
Schritt 3: Trocknen der Mikropartikel (1), die in Schritt 2 getränkt wurden, an der Luft und anschließend Trockenmahlen der getrockneten Mikropartikel zu feineren Mikropartikeln (7) mit einer Größe von 1 bis 50 Mikrometern, die sich zum Ziehen eignen, und homogenes Verteilen in einer Lösung; und
Schritt 4: Binden der feineren Mikropartikel (7), die homogen in einer Lösung verteilt sind, an ein Monomer durch eine Veresterungsreaktion, um die antibakterielle Polyestervormischung zu bilden.

2. Verfahren zur Herstellung einer porösen Polyestervormischung mit antibakteriellen und geruchsbeseitigenden Funktionen nach Anspruch 1, ferner umfassend den Schritt des Herstellens der antibakteriellen Polyesterfaser (8) aus der antibakteriellen Polyestervormischung durch das diskontinuierliche Niedertemperatur-Schnitzelspinnverfahren.

3. Verfahren zur Herstellung einer porösen Polyestervormischung mit antibakteriellen und geruchsbeseitigenden Funktionen nach Anspruch 1, wobei das Mikropartikel (1) Kieselgur oder Aktivkohle ist.

4. Verfahren zur Herstellung einer porösen Polyestervormischung mit antibakteriellen und geruchsbeseitigenden Funktionen nach Anspruch 1, wobei die Kräuterpflanzen aus der Gruppe ausgewählt sind, die aus Radix et Rhizoma Notopterygii, Schwarzer Germer, der Rinde des Hibiscus syriacus, Cinnamonum cassia Presl, Kampfer, Cnidium monnieri (L) Cuss, Hydnocarpus anthelmintica Pier., Johanniskraut und jeder Kombination davon besteht.

5. Verfahren zur Herstellung einer porösen Polyestervormischung mit antibakteriellen und geruchsbeseitigenden Funktionen nach Anspruch 1, wobei das anorganische antibakterielle Mineral (5) aus der Gruppe ausgewählt ist, die aus Realgar, Calamine, Melanterit, Talk, Alaune, Schwefel, Borax, Nano-Silber (Ag), Nano-Zink (Zn), Nano-Kupfer (Cu), Titandioxid (TiO₂) und jeder Kombination davon besteht.

6. Verfahren zur Herstellung einer porösen Polyestervormischung mit antibakteriellen und geruchsbeseitigenden Funktionen nach Anspruch 1, wobei die Lösung eine Ethylenglycollösung ist.

7. Verfahren zur Herstellung einer porösen Polyestervormischung mit antibakteriellen und geruchsbeseitigenden Funktionen nach Anspruch 2, wobei das feinere Mikropartikel (7) in jeder der antibakteriellen Polyestervormischungen ungefähr 10 bis 25% des Gesamtgewichts jeder der Polyestervormischungen umfasst.

8. Verfahren zur Herstellung von Fasern aus einer porösen Polyestervormischung mit antibakteriellen und geruchsbeseitigenden Funktionen nach Anspruch 3, wobei der Anteil der zugegebenen antibakteriellen Polyestervormischung ungefähr 5 bis 10% beträgt.

## Revendications

1. Procédé de fabrication d'un mélange mère de polyester poreux ayant des fonctions antibactériennes et d'élimination d'odeurs, ledit procédé comprenant les étapes suivantes :
étape 1 : broyage de microparticules (1) en microparticules de 1 à 1000 microns en taille ;
étape 2 : imprégnation des microparticules (1) obtenues dans l'étape 1 par des plantes médicinales organiques chinoises et l'alcool polyvinylique, ajout de minéraux (5) inorganiques antibactériens de 1 à 100 nanomètres en taille et agitation continue pendant plus de 24 heures, permettant ainsi une pénétration, une liaison et une adsorption suffisantes des plantes médicinales organiques chinoises et des minéraux (5) inorganiques antibactériens dans les pores des microparticules ;
étape 3 : séchage à l'air de microparticules (1) imprégnées dans l'étape 2 et ensuite broyage à sec desdites microparticules (1) séchées en microparticules (7) plus fines de 1 à 50 microns en taille, adaptées pour l'aspiration et la dispersion de manière homogène dans une solution ; et
étape 4 : liaison desdites microparticules (7) plus fines dispersées de manière homogène dans une solution avec un monomère par une réaction d'estérification pour former ledit mélange mère de polyester antibactérien.

2. Procédé de fabrication d'un mélange mère de polymère poreux ayant des fonctions antibactériennes et d'élimination d'odeurs selon la revendication 1, comprenant en outre l'étape de fabrication d'une fibre (8) de polyester antibactérien à partir dudit mélange mère de polyester antibactérien par une technique de centrifugation de copeaux en traitement par lot à faible température.

3. Procédé de fabrication d'un mélange mère de polyester poreux ayant des fonctions antibactériennes et d'élimination d'odeurs selon la revendication 1, dans lequel ladite microparticule (1) est du kieselguhr ou du carbone actif.

4. Procédé de fabrication d'un mélange mère de polyester poreux ayant des fonctions antibactériennes et d'élimination d'odeurs selon la revendication 1, dans lequel lesdites plantes médicinales sont choisies dans le groupe constitué de Radix et Rhizoma notopterygii, le vérâtre, la peau d'Hibiscus syriacus, Cinnamomum cassia Presl, le camphre, Cnidium monnieri (L) Cuss, Hydnocarpus anthelmintica Pier., la colophane et toute combinaison de ceux-ci.

5. Procédé de fabrication d'un mélange mère de polyester poreux ayant des fonctions antibactériennes et d'élimination d'odeurs selon la revendication 1, dans lequel ledit minéral (5) inorganique antibactérien est choisi dans le groupe constitué du réalgar, la smithsonite, la mélantérite, le talc, le sulfate d'aluminium, le soufre, le borax, l'argent (Ag) nanométrique, le zinc (Zn) nanométrique, le cuivre (Cu) nanométrique, le dioxyde de titane (TiO₂) et toute combinaison de ceux-ci.

6. Procédé de fabrication d'un mélange mère de polyester poreux ayant des fonctions antibactériennes et d'élimination d'odeurs selon la revendication 1, dans lequel ladite solution est une solution d'éthylène glycol.

7. Procédé de fabrication d'un mélange mère de polyester poreux ayant des fonctions antibactériennes et d'élimination d'odeurs selon la revendication 2, dans lequel ladite microparticule (7) plus fine dans chacun desdits mélanges mères de polyester antibactérien comprend environ 10 à 25 % du poids total de chacun desdits mélanges mères de polyester.

8. Procédé de fabrication de fibres de mélange mère de polyester poreux ayant des fonctions antibactériennes et d'élimination d'odeurs selon la revendication 3, dans lequel la proportion de mélange mère de polyester antibactérien ajouté est d'environ 5 à 10 %.
